# EUROPEAN PATENT SPECIFICATION

(11) **EP 1 363 230 B1**
(45) Date of publication and mention of the grant of the patent: **26.09.2007**
(21) Application number: 03004230.3
(22) Date of filing: 25.02.2003
(51) Int. Cl.: G06K 9/22, G06F 3/033

(54) **Classification analysis of freeform digital ink input**
Klassifikationsanalyse von Freiformeingaben mit digitaler Tinte
Analyse de classification d'une entrée de forme libre à encre numérique

(30) Priority: 14.05.2002 US 143864
(43) Date of publication of application: 19.11.2003
(73) Proprietor: MICROSOFT CORPORATION, Redmond, WA 98052 (US)
(72) Inventor: Shilman, Michael M., Seattle, WA 98103 (US); Wei, Zile, Haidian District Beijing 100080 (CN); Zou, Yu, Haidian District Beijing 100080 (CN); Raghupathy, Sashi, Redmond, WA 98052 (US); Jones, F. David, Redmond, WA 98052 (US); Lui, Charlton E., Redmond, WA 98052 (US); Wang, Jian, c/o Microsoft Research Asia, Haidian District, Bejing, 100080 (CN)
(74) Representative: Grünecker, Kinkeldey, Stockmair & Schwanhäusser Anwaltssozietät

(56) References cited:
- US-A- 6 111 985
- US-A- 6 130 962
- AREF W G ET AL: "On handling electronic ink" ACM COMPUTING SURVEYS, DEC. 1995, ACM, USA, vol. 27, no. 4, pages 564-567, XP002248836 ISSN: 0360-0300
- TAPPER C C ET AL: "ON-LINE HANDWRITING RECOGNITION - A SURVEY" PROCEEDINGS OF THE INTERNATIONAL CONFERENCE ON PATTERN RECOGNITION. (ICPR). ROME, 14 - 17 NOV., 1988, WASHINGTON, IEEE COMP. SOC. PRESS, US, vol. 2 CONF. 9, 14 November 1988 (1988-11-14), pages 1123-1132, XP000013056 ISBN: 0-8186-0878-1
- PATENT ABSTRACTS OF JAPAN vol. 009, no. 304 (P-409), 30 November 1985 (1985-11-30) & JP 60 136890 A (HITACHI SEISAKUSHO KK), 20 July 1985 (1985-07-20)

## Description

### TECHNICAL FIELD

Aspects of the present invention are directed generally to systems, methods, and computer-readable media including computer-executable instructions for analyzing and classifying handwritten digital ink as containing one or more different types of ink strokes.

### BACKGROUND

Typical computer systems, especially computer systems using graphical user interfaces (GUIs), such as Microsoft WINDOWS^{®}, are optimized for accepting user input from one or more discrete input devices, such as a keyboard for entering text, and a pointing device, such as a mouse with one or more buttons, for operating the user interface. The ubiquitous keyboard and mouse interface provides for fast creation and modification of documents, spreadsheets, database fields, drawings, photos and the like. However, a significant gap exists between the flexibility provided by the keyboard and mouse interface compared with non-computer (*i.e.*, standard) pen and paper. With the standard pen and paper, a user may edit a document, write in non-horizontal directions, write notes in a margin, draw pictures and other shapes, link separate sets of notes by connecting lines or arrows, and the like. In some instances, a user may prefer to use a pen to mark-up a document rather than review the document on-screen because of the ability to freely make notes outside of the confines of the keyboard and mouse interface.

Some computer systems, however, permit a user to write on a screen (*e.g*., using a "stylus" or "pen" for writing notes on an electronic input screen). For example, the Microsoft READER application permits one to add digital ink (also referred to herein as "electronic ink" or "ink") to a document. The system stores the ink and provides it to a user when requested. Other applications (for example, drawing applications as known in the art associated with the Palm 3.x and 4.x and PocketPC operating systems) permit the capture and storage of drawings. These drawings may include other properties associated with the ink strokes used to make up the drawings. For instance, line width and color may be stored with the ink. One goal of these systems is to replicate the look and feel of physical ink being applied to a piece of paper.

One activity normally reserved for physical ink and paper is note taking. Personal notes are unique as each user. Some users take notes using complete sentences, while others jot down thoughts or concepts and then link the concepts using arrows and the like. The latter type of notes tends to be written at different locations on a page and/or at different angles on the page. Additionally, some users revisit notes later and add further thoughts, clarify, and/or edit previously recorded notes. The value present in handwritten notes may rest not only in the actual text of the information recorded, but also in the layout of the notes and the juxtaposition of some notes with respect to others. Further value may be added in the speed at which users take notes.

The transition from an ink pen and physical paper note taking arrangement to a computer-based note taking arrangement may prove difficult. While computer-based note taking systems can provide advantages including handwriting recognition functionality, searchability, and written text reformatting, users may quickly become disoriented when the computer-based system does not function as expected.

A number of systems for electronically capturing, rearranging, and displaying handwriting as digital ink are known (for example, the InkWriter® system from Aha! Software, now owned by Microsoft Corporation of Redmond, Washington). These systems capture ink strokes and group the strokes into characters and words. Writing in multiple regions on a page, as many users do, can quickly result in confusion, for example, if information intended to be maintained as separate notes is combined by the system into a single, incoherent note. Also, in some existing systems, drag selection (akin to holding down a mouse button and dragging to select text in a text editor) may select large areas of blank space (*i.e.,* white space) on the page. When this selected text is cut and pasted (using standard computer-based text editing concepts) or otherwise utilized, the large volume of selected blank space may produce an unintended and surprising result. This result is counterintuitive to the average computer user because conventional text editing systems work differently.

Additionally, some known stylus-based computing systems that capture ink strokes require relatively structured ink input in order to function in an acceptable manner. For example, users of such systems typically are admonished to "write neatly" or "write between the lines" in a horizontal orientation or write in a specified ink input area. Failure to follow these instructions may cause recognition errors or other errors when the electronic ink is presented to an associated handwriting recognition system, thereby limiting the usefulness of the system for electronic note taking. Also, some users quickly become frustrated with these errors and limitations of the system and/or become frustrated when forced to constrain and adapt their handwriting to better "work around" the limitations of the system.

These shortcomings of existing electronic note taking systems effectively create barriers to adoption of stylus-based computing systems.

Moreover it is known from US-A-6130962 a handwritten memo database that stores stroke data and handwriting management data. A control unit classifies the stroke data into character strokes and figure strokes (according to JP 60136890). As a result, the stroke data is classified into character headers and figure headers. The control unit classifies the character stroke data into each character (according to JP 7-295733 and JP 8-50632) and classifies each character into Chinese characters and numerals according to the number of strokes of each character. The figure header of one figure is generated from the stroke data that has been classified as composing a figure and the figure of each figure header is classified into one of three shapes, namely an oval, a rectangle and a line (according to JP 60-136892).

Furthermore, the article "On handling electronic ink", by Aref et al., ACM Computing Surveys, Vol. 27, No. 4, December 1995, pp. 564-567, describes that pen input from a digitizer tablet is segmented into strokes, a standard set of features is extracted (*e.g.*, stroke length, total angle traversed), and the resulting vectors are clustered into a small number of basic stroke types. Comparisons are then performed between strings over this "ink" alphabet using approximate string-matching techniques.

In addition, JP 60136890 describes a technique to automatically switch modes from handwritten character input to handwritten figure input. It is described that if the stroke length is over the prescribed length (threshold), it is recognized to be a stroke to compose a figure, and if it is below the prescribed length, it is recognized to be a stroke to compose a character.

Furthermore, the article "On-line Handwriting Recognition" by Tappert et al., proceedings of the 3th int. Conference on Pattern Recognition, Nov 14-17, 1998, Vol. 2, Computer Society Press, pp. 1123-1132 describes that some pairs of characters can only be distinguished by context. As context, the character size relative to the line spacing or to other character sizes, or the position of the character relative to the baseline are described (page 1124, lines 11 to 21). In addition, isolation of various writing units, such as characters or words, prior to their recognition is described (page 1124, lines 29 to 30). Furthermore, it is outlined that for cursive script recognition there have not been many serious efforts towards obtaining a solution (page 1125, right column, lines 75 to 79).

Moreover, US-A-6111985 describes that the accuracy of handwritten character recognition is improved when the character is also analyzed with respect to its context. In particular, it is outlined that stroke information is sent to a shape matcher. The shape matcher returns a ranked list of alternates. A backpointer from each of the last-written alternates pointing on the lowest cost backpath to a predecessor is saved It is outlined that when the backpointers converge to one active alternate in a given list of alternates, that alternate and any of its preceding alternates on the path back therefrom are considered to be recognized.

### Summary of the Invention

Therefore, it is the object of the invention to provide an improved method and system for analyzing digital or electronic ink with respect to flexibility and efficiency.

The object is solved by the claimed subject matter of the independent claims.

Preferred embodiments are specified in the dependent claims.

The present invention provides flexible and efficient systems and methods for analyzing digital or electronic ink, as well as computer-readable media for performing these methods and operating such systems. More specifically, examples of the present invention relate to systems and methods for automatically classifying electronic ink strokes on a page into one or more types of stroke (such as drawing strokes, text strokes, etc.). The systems and methods according to some examples of the invention receive input ink data including at least one stroke set and determine the type of stroke(s) contained in the stroke set based, at least in part, on information regarding the contextual environment relating to the stroke set. The contextual environment of the stroke set may suggest contextual features of the stroke set. These contextual features may include, for example, aggregations of various local features of the individual stroke(s) contained within the stroke set, various features of the interrelationships between individual strokes in the stroke set, and/or various features relating to stroke(s) associated in some manner with the stroke set. The specific contextual features evaluated and relied upon may depend on the specific stroke types under consideration.

These and other features and aspects of the invention will be apparent upon consideration of the following detailed description.

### BRIEF DESCRIPTION OF DRAWINGS

The foregoing summary, as well as the following detailed description, may be better understood when read in conjunction with the accompanying drawings, which are included by way of example, and not by way of limitation with regard to the claimed invention.

Figure 1 illustrates a schematic diagram of an exemplary general-purpose digital computing environment that may be used to implement various aspects of the present invention.

Figure 2 illustrates an exemplary pen-based computing system that may be used in accordance with various aspects of the present invention.

Figure 3 illustrates an example of an overall digital ink processing system that may include classification analysis systems and methods according to this invention.

Figure 4 illustrates a general example of various procedures or parse engines that may be used to provide input data useful in some examples of classification analysis systems and methods according to the invention.

Figures 5A and 5B illustrate examples of parse trees describing input data used by and output data generated by one example of a layout analysis system and method useful to provide input data for some examples of classification analysis systems and methods according to the invention.

Figure 6 illustrates a schematic diagram of an example of classification analysis procedures or parse engines according to the invention.

Figure 7 illustrates a schematic diagram of another example of classification analysis procedures or parse engines according to the invention.

Figure 8 illustrates local minima and maxima points that assist in defining stroke fragments used in some examples of processing steps in the present invention.

Figure 9 illustrates a flow diagram for a classification analysis procedure useful according to some examples of the invention.

Figure 10 illustrates a schematic diagram of an example of a system useful in allowing the classification analysis procedure or method of the present invention to operate at the same time a user is actively entering ink into a document.

### DETAILED DESCRIPTION

As described above, examples of the present invention relate to systems and methods for analyzing digital or electronic ink, and particularly for automatically classifying electronic ink strokes on a page into one or more types of stroke (such as drawing type strokes, text type strokes, etc.). The following describes various examples of the invention in more detail.

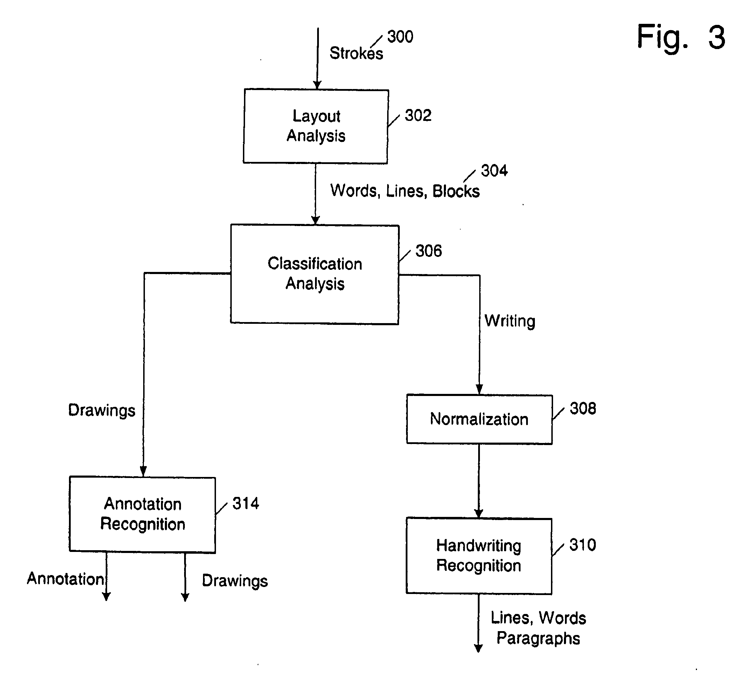

This specification contains figures that schematically illustrate various methods and systems useful in practicing examples of the invention (*e.g.*, Figures 3, 4, 6, 7, and 10). These schematic illustrations are intended to generally illustrate examples of both systems and/or methods useful in accordance with the invention. Therefore, in some instances, depending on the context of the sentence, a specific element from these figures (such as layout analysis element 302, temporal line grouping element 408, and the like) may be referred to as a system (*e.g.*, a temporal line grouping system 408), while in other instances that same element and reference number may be used in reference to a method, a procedure, a step, a parse engine, and/or the like. All of these variations (*e.g.,* systems, methods, steps, procedures, parse engines, and the like) are intended to be included within the scope of these figures.

The following description is divided into sub-sections to assist the reader. The sub-sections include: Terms, General-Purpose Computer, Classification Analysis Overview, Detailed Description of Classification Analysis, Other Features, and Conclusion.

### I. TERMS

### The following terms are used in this specification:

Ink (also called "digital ink" or "electronic ink") - A sequence or set of handwritten strokes. A sequence of strokes may include strokes in an ordered form. The sequence may be ordered by the time the stroke was captured and/or by where the stroke appears on a page. Other orders are possible.

Point - Information defining a location in space. For example, a point may be defined relative to a capturing space (for example, points on a digitizer) and/or a display space (the points or pixels of a display device). Points may be represented using a variety of known techniques including two dimensional Cartesian coordinates (X, Y), polar coordinates (r, Θ), three dimensional coordinates ((X, Y, Z), (r, Θ, ρ), (X, Y, t (where t is time)), (r, Θ, t)), four dimensional coordinates ((X, Y, Z, t) and (r, Θ, ρ, t)), and other techniques as known in the art.

Stroke - A sequence or set of captured points. A stroke may be determined in a number of ways, for example, using time (*e.g*., a stroke is all points encountered by the stylus during a predetermined time interval), using a predetermined number of points (*e.g*., a stroke is all points I through X where X is predefined), or using stylus contact with the digitizer surface (*e.g.*, a stroke is all points encountered by the stylus between a pen-down event and a pen-up event). When rendered, the sequence of points may be connected with lines. Alternatively, a stroke may be represented as a point and a vector in the direction of the next point. Further, a stroke may be referred to as a simple list (or array or table) of points. In short, a stroke is intended to encompass any representation of points or segments relating to ink, irrespective of the underlying representation of points and/or what connects the points.

Stroke set - A data set containing information regarding a single stroke or a plurality of strokes associated with one another. A stroke set may include a line of associated strokes, a block (*e.g*., a paragraph) of associated strokes, or some other association of plural strokes.

Stroke type - A term describing the general category or characteristic of a stroke or stroke set. Examples of stroke types include "drawing type strokes" and "writing type strokes."

Drawing type strokes - One example of a stroke type. Drawing type strokes typically have low linearity. Examples of drawing type strokes may include: free form drawings, flow diagrams, tables, charts, some types of mathematics, etc.

Writing type strokes - Another example of a stroke type. Writing type strokes typically have high linearity. Examples of writing type strokes may include: text, music, some types of mathematics, etc.

Contextual environment - With respect to a specific stroke or stroke set, the contextual environment relates to one or more characteristics of a group of strokes that are located within and/or around the specified stroke or stroke set.

Local features - Features or characteristics of a particular stroke. Local features of a stroke may include, for example, stroke length, stroke width, stroke height, stroke curvature, number of stroke fragments, average stroke fragment height or width, median stroke fragment height or width, and the like.

Contextual features - Features or characteristics of a group of strokes in some manner associated with a specific stroke or stroke set (optionally including the characteristics of the specific stroke or stroke set). Examples of contextual features of a stroke or stroke set include features or characteristics of stroke(s) within the same stroke set, features or characteristics of strokes in proximity to the stroke or stroke set, and/or features or characteristics of strokes associated in some manner to the stroke or stroke set. More specific examples of contextual features include the number of strokes or stroke fragments in the stroke set, the number of strokes or stroke fragments in a line containing the stroke set, the number of strokes or stroke fragments in a block containing the stroke set, linearity of the stroke set, linearity of a line containing the stroke set, linearity of lines in a block containing the stroke set, and the like.

Render - The process of determining how graphics (and/or ink) are to be displayed, whether on a screen or printed.

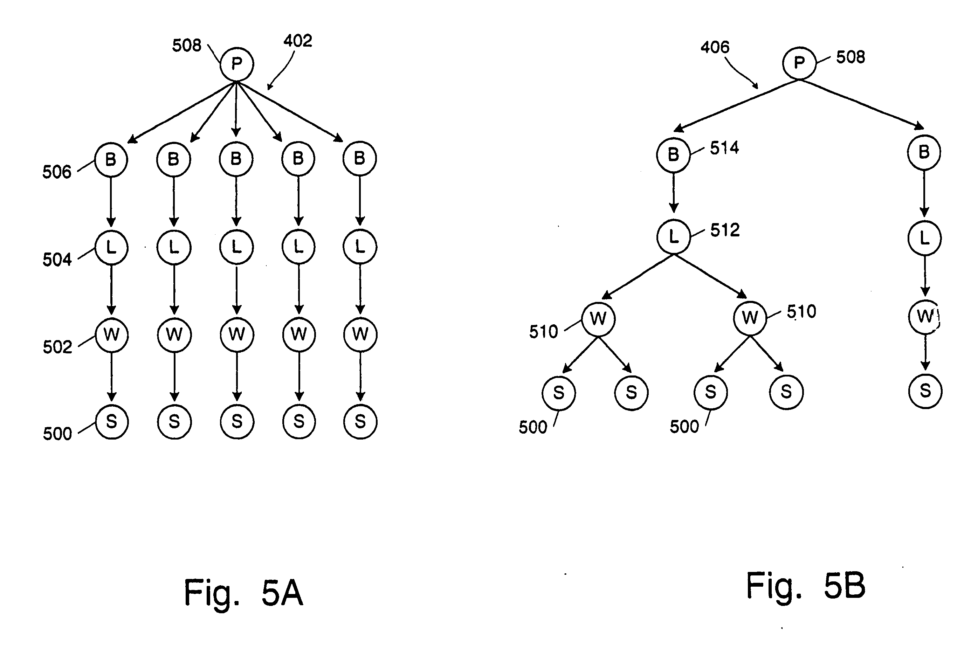

Parse Tree - A data structure representing the structure of a document. Figures 5A and 5B illustrate examples of parse trees, both before and after a layout analysis procedure, wherein a given page of a document is parsed into blocks, lines, words, and individual strokes.

Parse engine - A single processing step or procedure in an ink analysis engine. A typical ink analysis engine contains several parse engines, each focusing on a particular task. One example of an ink analysis engine is the layout analysis engine described herein, which includes individual parse engines for temporal line grouping, spatial block grouping, spatial line grouping, list detection, and spatial word grouping. A parse engine takes a parse tree as input and modifies it (if appropriate) to produce a parse tree with a different structure, which in turn may be passed along as input to the next parse engine.

Stroke fragment - A subsequence of the points in a stroke, derived by splitting the stroke at salient points, such as points of high curvature (cusps) and/or local maxima and minima.

### II. GENERAL-PURPOSE COMPUTER

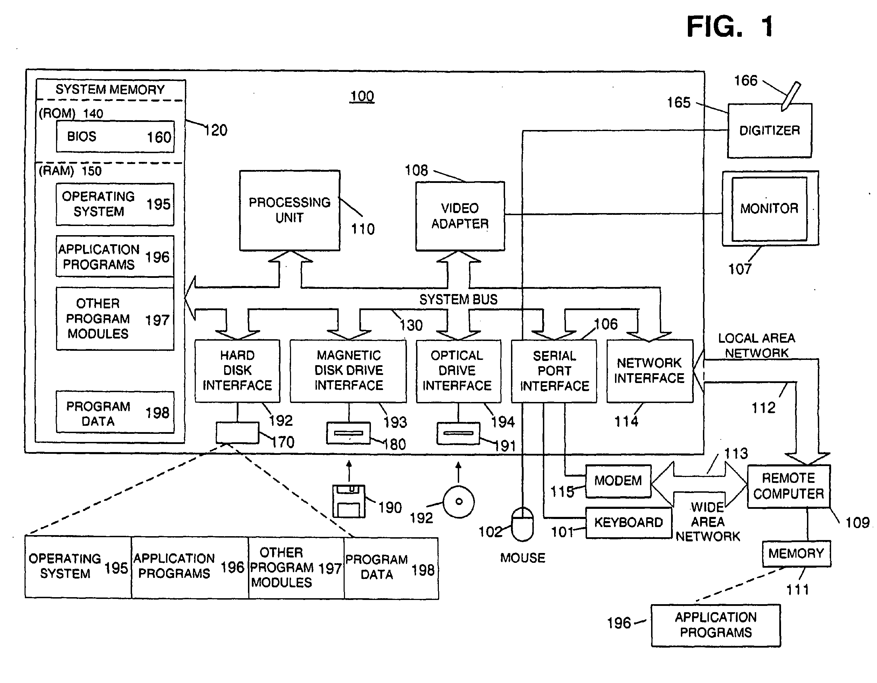

Figure 1 illustrates a schematic diagram of an exemplary conventional general-purpose digital computing environment that may be used to implement various aspects of the present invention. In Figure 1, a computer 100 includes a processing unit 110, a system memory 120, and a system bus 130 that couples various system components including the system memory to the processing unit 110. The system bus 130 may be any of several types of bus structures including a memory bus or memory controller, a peripheral bus, and a local bus using any of a variety of bus architectures. The system memory 120 includes read only memory (ROM) 140 and random access memory (RAM) 150.

A basic input/output system 160 (BIOS), containing the basic routines that help to transfer information between elements within the computer 100, such as during start-up, is stored in the ROM 140. The computer 100 also includes a hard disk drive 170 for reading from and writing to a hard disk (not shown), a magnetic disk drive 180 for reading from or writing to a removable magnetic disk 190, and an optical disk drive 191 for reading from or writing to a removable optical disk 192, such as a CD ROM or other optical media. The hard disk drive 170, magnetic disk drive 180, and optical disk drive 191 are connected to the system bus 130 by a hard disk drive interface 192, a magnetic disk drive interface 193, and an optical disk drive interface 194, respectively. The drives and their associated computer-readable media provide nonvolatile storage of computer readable instructions, data structures, program modules, and other data for the personal computer 100. It will be appreciated by those skilled in the art that other types of computer readable media that may store data that is accessible by a computer, such as magnetic cassettes, flash memory cards, digital video disks, Bernoulli cartridges, random access memories (RAMs), read only memories (ROMs), and the like, may also be used in the example operating environment.

A number of program modules may be stored on the hard disk drive 170, magnetic disk 190, optical disk 192, ROM 140, or RAM 150, including an operating system 195, one or more application programs 196, other program modules 197, and program data 198. A user may enter commands and information into the computer 100 through input devices, such as a keyboard 101 and a pointing device 102. Other input devices (not shown) may include a microphone, joystick, game pad, satellite dish, scanner, or the like. These and other input devices often are connected to the processing unit 110 through a serial port interface 106 that is coupled to the system bus 130, but may be connected by other interfaces, such as a parallel port, game port, or a universal serial bus (USB). Further still, these devices may be coupled directly to the system bus 130 via an appropriate interface (not shown). A monitor 107 or other type of display device is also connected to the system bus 130 via an interface, such as a video adapter 108. In addition to the monitor 107, personal computers typically include other peripheral output devices (not shown), such as speakers and printers. As one example, a pen digitizer 165 and accompanying pen or user input device 166 are provided in order to digitally capture freehand input. The pen digitizer 165 may be coupled to the processing unit 110 via the serial port interface 106 and the system bus 130, as shown in Figure 1, or through any other suitable connection. Furthermore, although the digitizer 165 is shown apart from the monitor 107, the usable input area of the digitizer 165 may be co-extensive with the display area of the monitor 107. Further still, the digitizer 165 may be integrated in the monitor 107, or may exist as a separate device overlaying or otherwise appended to the monitor 107.

The computer 100 may operate in a networked environment using logical connections to one or more remote computers, such as a remote computer 109. The remote computer 109 may be a server, a router, a network PC, a peer device, or other common network node, and typically includes many or all of the elements described above relative to the computer 100, although only a memory storage device 111 with related applications programs 196 have been illustrated in Figure 1. The logical connections depicted in Figure 1 include a local area network (LAN) 112 and a wide area network (WAN) 113. Such networking environments are commonplace in offices, enterprise-wide computer networks, intranets, and the Internet.

When used in a LAN networking environment, the computer 100 is connected to the local network 112 through a network interface or adapter 114. When used in a WAN networking environment, the personal computer 100 typically includes a modem 115 or other means for establishing a communications link over the wide area network 113, *e.g.,* to the Internet. The modem 115, which may be internal or external, is connected to the system bus 130 via the serial port interface 106. In a networked environment, program modules depicted relative to the personal computer 100, or portions thereof, may be stored in a remote memory storage device.

It will be appreciated that the network connections shown are exemplary and other techniques for establishing a communications link between the computers may be *used. The existence of any of various well-known protocols such as TCP/IP, Ethernet, FTP, HTTP and the like is presumed, and the system may be operated in a client-server configuration to permit a user to retrieve web pages from a web-based server. Any of various conventional web browsers may be used to display and manipulate data on web pages.

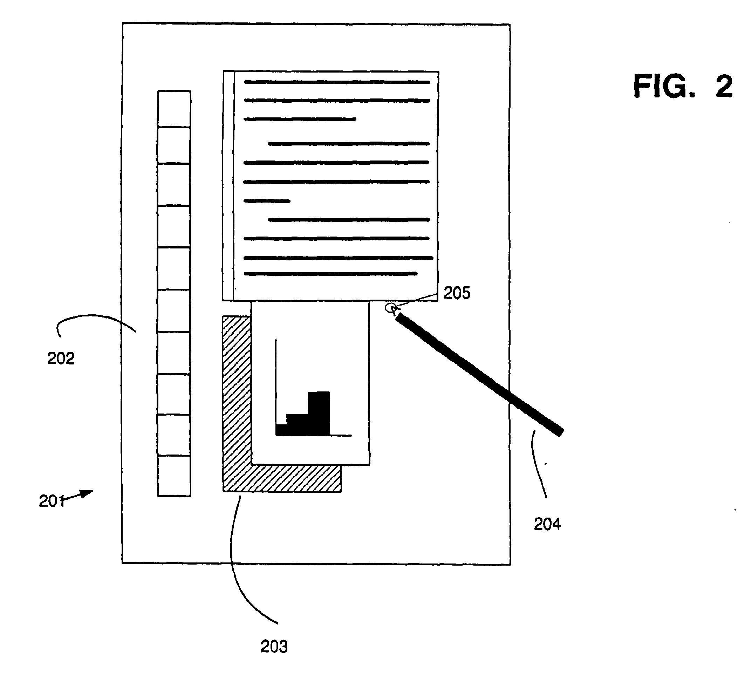

Figure 2 illustrates an exemplary pen-based computing system 201 that may be used in accordance with various aspects of the present invention. Any or all of the features, subsystems, and functions in the system of Figure 1 may be included in the computer of Figure 2. Pen-based computing system 201 includes a large display surface 202, *e.g.*, a digitizing flat panel display, such as a liquid crystal display (LCD) screen, on which a plurality of windows 203 is displayed. Using stylus 204, a user may select, highlight, and/or write on the digitizing display surface 202. Examples of suitable digitizing display surfaces 202 include electromagnetic pen digitizers, such as Mutoh or Wacom pen digitizers. Other types of pen digitizers, *e.g.*, optical digitizers, may also be used. Pen-based computing system 201 interprets gestures made using stylus 204 in order to manipulate data, enter text, create drawings, and/or execute conventional computer application tasks, such as spreadsheets, word processing programs, and the like.

The stylus 204 may be equipped with one or more buttons or other features to augment its selection capabilities. In one example, the stylus 204 may be implemented as a "pencil" or "pen," in which one end constitutes a writing element and the other end constitutes an "eraser" end, and which, when moved across the display, indicates portions of the display to be erased. Other types of input devices, such as a mouse, trackball, or the like may be used. Additionally, a user's own finger may be the stylus 204 and used for selecting or indicating portions of the displayed image on a touch-sensitive or proximity-sensitive display. Consequently, the term "user input device," as used herein, is intended to have a broad definition and encompasses many variations on well-known input devices, such as the stylus 204. Region 205 shows a feedback region or contact region permitting the user to determine where the stylus 204 contacted the display surface 202.

### III. CLASSIFICATION ANALYSIS OVERVIEW

### A. Classification Analysis Systems and Methods

The present invention relates to systems and methods for analyzing electronic ink input, *e.g.*, in a stylus-based computing environment. In stylus-based computing environments, electronic ink may be introduced into the system as "strokes" by writing with a stylus on a digitizing display surface that captures the strokes. As one desirable feature provided in at least some examples according to this invention, the user has free reign to write anywhere on the digitizing display surface, in any orientation, just like a user would have with conventional pen and paper. In these examples of the invention, the user's input is not confined to any particular computer or line orientation, stroke size, timing, or in any other manner. Moreover, the user need not advise the system in advance of the type of strokes that he/she intends to enter (*e.g*., no need to preset a drawing mode, a text mode, a music mode, a math mode, or the like). The classification analysis systems and methods according to this invention evaluate a stroke set and determine the type of stroke represented in the stroke set. This classification information then can be used in sending the ink input data to other appropriate processing systems, which may result in better processing of the input data strokes. Moreover, proper classification of the input stroke data can help the computing system present suitable or targeted editing menus and/or other menus and/or other information to the user, thereby making the overall pen-based computing systems and methods more user-friendly.

In general, this invention relates to systems and methods for classifying input electronic or digital ink strokes (*e.g.*, determining whether the ink strokes constitute writing or drawing, and/or even more particularly, whether the input ink strokes constitute handwritten text, drawings, musical notes, flowcharts, mathematics, graphs, charts, tables, etc.). The systems and methods may include an input device or step for receiving input ink data including at least a first stroke set (which may include one or more strokes), and a processor system or step for determining a type of stroke contained in the first stroke set based, at least in part, on information regarding a first contextual environment relating to the first stroke set. As noted above, the "contextual environment" of a stroke set relates to one or more characteristics of a group of strokes that are located within and/or around the specified stroke or stroke set.

The invention also relates to computer-readable media containing computer-executable instructions for performing the classification analysis methods and operating the classification analysis systems.

The "contextual environment" of a stroke set may include information relating to at least one contextual feature associated with the stroke set. This contextual feature may relate to a feature or characteristic of at least one member selected from the group consisting of: one or more strokes in the stroke set itself, one or more strokes located within a predetermined range of the stroke set, and/or one or more strokes associated with the stroke set. As a more specific example, the contextual environment or contextual features of a stroke set may relate to features or characteristics of a block of input ink data including the stroke set (*e.g.,* a paragraph containing the stroke set) or a line of input ink data including the stroke set.

One evaluation or determination made in classification procedures according to various examples of the invention may include a determination as to whether a given stroke set contains drawing type strokes or writing type strokes. This determination takes advantage of characteristic features of the various types of ink input being evaluated or considered. For example, a set of handwritten text strokes commonly includes a defined structure, often both horizontally and vertically, that is typically very linear, with several individual strokes present on a given line. Moreover, the individual strokes in handwritten text typically have a similar size (usually relatively short, particularly their height) and a generally "loopy" shape. A set of handwritten drawing strokes, on the other hand, typically will exhibit a less globally linear structure and less "loopiness," and such sets of strokes often contain at least some relatively long strokes that in some manner surround other strokes. Accordingly, a drawing/writing classification analysis procedure may take advantage of one or more of these features characteristic of handwritten text and drawings in determining whether a given stroke set contains writing or drawing type strokes.

The classification analysis systems and methods according to various examples of the invention, however, need not only generally evaluate for text or drawing type classification. Several other different types of "writing" strokes may be evaluated and recognized without departing from the invention, provided a set of characteristics or features can be defined for that type of stroke. Some of these other types of writing strokes also may have relatively linear contextual features like handwritten text. For example, handwritten music may tend to have a relatively linear structure. Additionally, at least some mathematical writing may tend to be relatively linear in character (*e.g.*, simple mathematics, algebra, calculus, etc.). All of these different types of "writing" broadly fall within the scope of the term "writing-type" strokes or stroke sets, as used in this specification.

Similarly, various different types of non-linear drawing type strokes also exist. For example, in addition to stroke sets containing free form drawings, stroke sets containing tables, graphs, charts, flowcharts, and the like generally may be considered "drawing-type" strokes or stroke sets in accordance with some examples of this invention. Additionally, some types of mathematical calculations may be better characterized as drawing type strokes rather than writing type strokes (for example, long division, long columns of numbers for addition or subtraction, geometry, etc.).

Accordingly, in addition to (or as an alternative to) determining whether a given stroke set broadly constitutes a drawing type stroke set or a writing type stroke set, systems and methods according to some examples of this invention may more particularly classify a given stroke set as containing, for example, handwritten text, music, mathematics, tables, graphs, charts, flowcharts, free form drawings, etc. Examples of contextual features or characteristics of stroke sets that may be considered in classifying stroke sets into these particular types may include:

Text - high number of strokes or stroke fragments, high linearity per line, high number of "loopy" strokes, relatively similar stroke or stroke fragment sizes, relatively small stroke or stroke fragment sizes, relatively short stroke or stroke fragment spacings, lines that are vertically spaced and horizontally overlapping, etc.

Mathematics - high number of strokes or stroke fragments, high linearity per line, high number of "loopy" strokes, relatively similar stroke or stroke fragment sizes, relatively small stroke or stroke fragment sizes, relatively short stroke or stroke fragment spacings, presence of mathematical symbols (*e.g.*, +, -, %, =, <, >, π, ≤, x, ≥, ∂, ≈, ∫, sin, cos, tan, etc.), etc.

Music - high number of strokes or stroke fragments, high linearity per line, relatively similar stroke or stroke fragment sizes, relatively small stroke or stroke fragment size, presence of musical symbols (*e.g.,* vertical bars, musical notes, etc.), etc.

Tables - long linear strokes that intersect and enclose text, column and row structure, regular gridded spacing, etc.

Graphs - two long linear, perpendicular strokes forming the abscissa and ordinate axes, abscissa and ordinate labels, a series of short strokes (optionally spaced apart) along the abscissa and ordinate axes, long strokes between the abscissa and ordinate axes lines, etc.

Charts - one or more relatively long, non-loopy strokes enclosing one or more long straight strokes (*e.g*., a pie chart), etc.

Flowcharts - one or more relatively short, non-loopy strokes enclosing text (*e.g.*, a box, circle or oval enclosing text), straight strokes (or arrows) between text enclosing strokes, etc.

Of course, various other types of contextual environment information or contextual features may be considered and relied upon in determining the specific type of strokes present in a stroke set without departing from this invention. Systems and methods according to some examples of the invention may be used to classify any number of different types of strokes, provided the appropriate contextual environment information or contextual features are available for the evaluation and classification.

In addition to looking at the contextual environment or contextual features relating to a stroke set, the systems and methods according to some examples of the invention also may look at "local features" of one or more strokes contained in the stroke set as part of the classification analysis. The "local features" may include one or more characteristics or attributes of specific individual strokes within a stroke set.

Examples of local features or characteristics of individual strokes that may be considered in classifying stroke sets include:

Text - stroke length, stroke curvature, etc.

Mathematics - stroke length or shape corresponding to numbers or mathematical symbols, etc.

Music - stroke length and shape corresponding to musical notes, etc.

Tables - long linear stroke, regular gridded spacing, etc.

Graphs - long perpendicular "axis" strokes, etc.

Charts - long, non-loopy, closed stroke (*e.g*., a pie chart), etc.

Flowcharts - short, non-loopy stroke (*e.g*., a box, circle or oval), straight stroke (or arrow), etc.

Other features of individual strokes also may be considered and evaluated without departing from the invention.

Classification systems and methods according to the invention may form a portion of an overall electronic ink processing system or method, an example of which is described in more detail below.

### B. General System

Figure 3 is a flow diagram that illustrates an example of an overall system and method in which classification analysis systems and methods according to some examples of this invention may be used. In the example of Figure 3, incoming or input strokes 300 first are subjected to a layout analysis 302, which may combine and parse the individual strokes into associated stroke sets, such as words, lines, blocks, and/or other groupings 304, and/or may provide other information relating to the layout of strokes on a page. While any suitable systems or methods can be used to provide associated stroke sets for classification analysis without departing from this invention, one suitable and exemplary procedure for providing the input data is described in more detail below.

After layout analysis 302, the data may be introduced into a variety of different ink analysis engines. In the illustrated system of Figure 3, the data is next introduced to a classification analysis system or method 306 according to this invention. The classification analysis system or engine 306 determines the type(s) of strokes included in the specific input data stroke set (*e.g*., whether individual stroke or stroke set represents flow diagrams, freeform drawings, text, music, mathematics, charts, graphs, etc.).

Further processing of the input ink may depend on the stroke type recognized by the classification analysis system or engine 306. For example, for strokes or stroke sets that are classified as writing, the classified stroke sets may be sent to a handwriting recognition system 310 or another appropriate processing system. If necessary or desired, prior to introduction into the handwriting recognition system 310 or other processing system, the lines or blocks of ink data may be "normalized" using a normalization algorithm or system 308, *e.g.*, to place the input text in an optimum orientation for analysis by the handwriting recognition system 310 or other processing system. Conventional normalization systems or methods 308 and/or handwriting recognition systems or methods 310 may be used without departing from the present invention. The data output from the handwriting recognition system or method 310 may constitute machine-generated text (*e.g.*, lines, words, paragraphs 312, etc.) usable in any conventional manner, such as in conventional word processing systems (*e.g.*, Microsoft WORD^{®} or the like), e-mail handling systems, etc.

As another example, if the classification analysis engine 306 recognizes the input strokes or stroke sets as containing drawing type strokes, the data may then be transferred to an annotation recognition system or method 314, which can be used to recognize textual information in the drawing. Further processing can proceed in any conventional manner. For example, if desired, the drawings may be "cleaned-up," wherein the handwritten annotations may be replaced with machine-generated text, handwritten drawing lines or shapes (*e.g.*, circles, triangles, rectangles, etc.) may be replaced with machine-generated elements, and the like. Also, the drawings (either the handwritten versions or later machine-generated versions) can be introduced into any suitable programs or systems without departing from this invention.

The classification analysis systems and methods according to some examples of the invention also may recognize other specific writing or drawing types without departing from the invention. For example, a classification analysis system may recognize input stroke sets as containing music, mathematical information, tables, charts, graphs, flow diagrams, etc., without departing from the invention. Such stroke sets, if present, could be sent to more specialized recognition systems and/or to other processing applications (*e.g.*, to a music synthesizer, or the like).

### C. Input To The Classification Analysis Engine

The input data for use in a classification analysis engine 306 according to examples of the present invention can take on any suitable form. For example, in one exemplary procedure as illustrated in Figure 3, individual strokes of input ink data are combined together and associated into data sets as a result of a succession of decisions made by a layout analysis engine 302, which groups or associates various individual strokes based on an overall ink layout and statistics obtained from the input ink. The layout analysis engine 302 may provide a hierarchical clustering of ink strokes on a page, which allows global statistic calculations over the cluster(s). The first stroke grouping decisions are conservative, based on local layout relationships when the clusters of ink strokes are small (*e.g.*, clusters representing individual strokes or relatively short combinations of strokes). Later stroke grouping decisions can be more aggressive, due to the more global statistics collected from larger clusters (*e.g.*, stroke sizes over a longer line, relative stroke spacing, line angles, etc.). Multiple passes through the input ink data may be conducted to enable increasingly aggressive decision making in determining whether to merge strokes to form stroke sets, such as lines and/or blocks of input ink strokes.

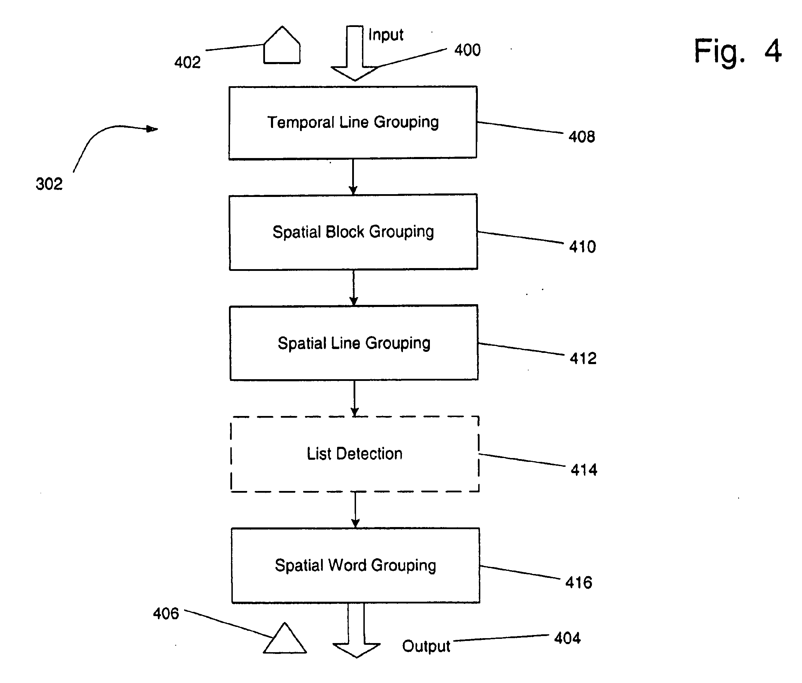

Figure 4 generally illustrates steps or parse engines involved in one example of an ink layout analysis system or method 302 useful in providing input data for some examples of the classification systems and methods according to this invention. Because of the freedom provided to a user in inputting digital ink into the systems and methods according to these examples of the invention *(e.g.,* a user is allowed to write anywhere on a page, in any orientation, at any time, using any desired stroke size), when the layout analysis procedure 302 begins, there may be no preliminary information from which to determine the proper orientation or type of input data (*e.g.*, whether the incoming input data 400 is textual, drawing, mathematic, music, flow diagrams, charts, graphs, etc. and/or whether the incoming input data is written horizontally, on an angle, vertically, etc.). Element 402 in Figure 4 provides a general graphical representation of an input data structure 400. This graphical representation 402 is illustrated in more detail in the parse tree of Figure 5A. In general, when the layout analysis procedure 302 begins, it treats every stroke S 500 on a given page P 508 as a separate word W 502, every word W 502 is treated as a separate line L 504, and every line L 504 is treated as a separate block B 506.

While this description of the layout analysis engine 302 uses terms like "word," "line," and "block," these terms are used in this specification as a matter of convenience to refer to groups of associated strokes or stroke sets. At the time the layout analysis step 302 occurs in this example of the invention, no final determination has been made as to whether individual strokes or stroke sets constitute writing, drawings, etc.

The layout analysis engine 302 according to this example of the invention operates greedily, such that during each pass (or operation of each parse engine) stroke or line merger operations occur, but splits do not. Moreover, the engine 302 may be operated with tests and tolerances such that undesired merger operations do not occur.

As a result of the operation of layout analysis engine 302, the individual strokes S 500 may be combined into associated words W 502, lines L 504, and blocks B 506, where appropriate. Figure 5B illustrates a graphical representation 406 of a possible data structure for the data output 404 from the layout analysis engine 302. As illustrated in Figure 5B, the page 508 overall contains the same stroke information, but certain strokes S 500 have been combined or associated together to form words W 510, and certain words W 510 have been joined together to form a line L 512. Of course, a word may contain any number of strokes, and likewise a line may contain any number of words. Also, although not illustrated in the particular parse tree example of Figure 5B, two or more lines also may be joined together to form a block 514.

Figure 4 provides a schematic overview of one example of a suitable layout analysis engine 302 useful in producing input ink stroke sets for analysis by a classification analysis system or method according to the invention. In this example, a first step in the layout analysis procedure 302 is a temporal line grouping step 408, which generally compares features of temporally adjacent strokes and combines them as lines, if appropriate. Various factors may be taken into account in determining whether temporally adjacent strokes should be grouped together, such as stroke size, inter-stroke spacing, stroke angle, etc. Once this temporal line grouping step 408 is completed, the next step in the analysis 302, a spatial block grouping step 410, compares the temporal line groupings and combines lines that are located close to one another as spatial blocks (other criteria also may be considered). Again, various factors may be taken into account in determining whether a spatial block grouping should be made, such as stroke size, inter-stroke spacing, line angle, etc.

The temporally grouped lines (from step 408) may be further grouped into longer lines (if appropriate), optionally taking into consideration their spatial block relationship or orientation, in a spatial line grouping step 412. This spatial line grouping step 412 need not consider the time of one stroke compared to another stroke, although factors in addition to the lines' spatial relationship or orientation may be taken into consideration, such as line angle, stroke size, etc. Also, the results of the spatial block grouping procedure 410 may be used as a factor in determining whether a spatial line grouping should be made between two existing temporal line groupings (*e.g.*, if both temporal line groupings lie in a common spatial block grouping, the temporal line groupings are more likely to be located on a common line, provided their spatial relationship and/or orientation indicate that they may lie on a common line).

Once the spatial line groupings have been completed, the layout analysis procedure 302 according to this example of the invention may then group the individual strokes in the lines into one or more spatial word groupings 416, depending, for example, on inter-stroke spacing, stroke orientation, stroke size, etc.

Figure 4 also illustrates an optional parse engine or step in broken lines that may be performed in the layout analysis 302. This optional step is called "list detection" 414. Often, when users write a list, they tend to write a column of numbers or letters, and then fill in the list elements. At other times, users will write out the content of the list, and then later add a column of numbers, letters, or bullet points. This list detection engine 414 detects these special circumstances and combines the number, letter, or bullet point strokes with the corresponding list element.

The various steps in this exemplary ink analysis engine 302 (Figure 4) may be changed in order or omitted without departing from the invention. For example, if desired, the spatial line grouping step 412 may take place before the spatial block grouping step 410.

The output data 404 from the layout analysis engine 302 can be used in a classification analysis engine 306, as illustrated in Figure 3, and from there the classified data may proceed to other appropriate processing engines (*e.g.*, annotation recognition 314, handwriting recognition 310, etc.).

Of course, other suitable engines or procedures for grouping or associating individual strokes into stroke sets can be used without departing from this invention. Also, if desired, prior to processing, the user could indicate to the system that certain strokes always should be grouped together (*e.g*., by drawing a line around, highlighting, or otherwise selecting input data strokes to be associated together).

### IV. DETAILED DESCRIPTION OF CLASSIFICATION ANALYSIS

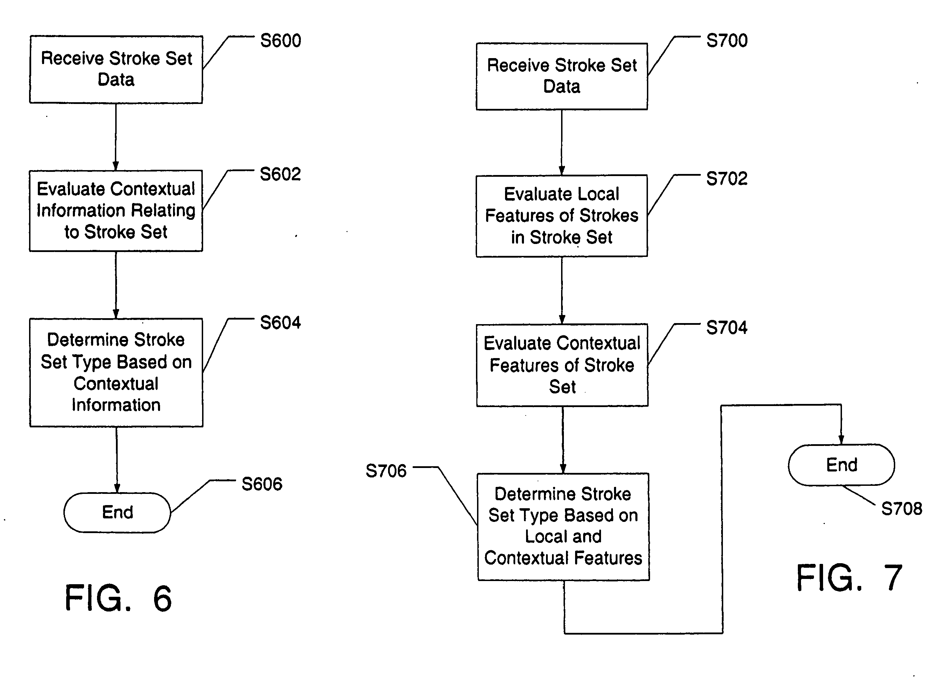

This portion of the specification describes examples of the classification analysis procedure or engine 306 according to the invention in more detail. A general classification analysis procedure according to one example of the invention is illustrated in the schematic diagram of Figure 6.

Initially, in processes and methods according to this example of the classification analysis, data relating to a set of electronic ink strokes (*i.e.*, a stroke set) is received or input into the classification analysis system (Step S600). The stroke set may contain electronic ink data in many different forms or formats. For example, the stroke set may contain information relating to any number of strokes, provided the strokes in the stroke set are associated with one another in some manner. As more specific examples, the strokes in the stroke set may represent all of or part of a word or line of stroke data obtained from an ink layout analysis system 302 (*e.g.*, a spatial line grouping, a temporal line grouping, or a spatial word grouping from the layout analysis engine 302 described in conjunction with Figures 3 and 4). As another example, the strokes in the stroke set may represent all of or part of a block of stroke data obtained from an ink layout analysis system 302 (*e.g.*, a spatial block grouping from the layout analysis engine 302 described in conjunction with Figures 3 and 4). Any suitable method and/or system for obtaining and sending stroke sets (*e.g.*, words, lines, blocks, paragraphs, etc. of associated stroke data) to the classification analysis engine 306 can be used without departing from the invention.

Once the stroke set has been ascertained and sent to the classification analysis system 306, systems and methods according to this example of the invention attempt to classify and assign a stroke type to the stroke(s) contained in the stroke set. For simplicity, the following description primarily describes discerning writing type strokes from drawing type strokes. However, as discussed above, various different stroke types, both within these general headings or categories and/or in addition to these general headings or categories, may be evaluated and classified without departing from this invention.

The next step in the procedure requires evaluation of contextual environment information relating to the stroke set (Step S602) to determine whether the stroke set is in a drawing type environment or a writing type environment. Contextual environment relates to one or more characteristics of a group of strokes that are located within and/or around the given stroke or stroke set being evaluated. In Step S604, if the contextual environment information indicates that the stroke set forms a drawing (or part of a drawing), the stroke set is classified as drawing type. Alternatively, if the contextual environment information indicates that the stroke forms writing (or part of a writing), the stroke set is classified as writing type in Step S604. As described above, stroke sets may be classified more specifically and/or in other classifications without departing from the invention. The procedure then ends (Step S606), or alternatively, forwards the resulting data from the classification analysis procedure 306 to another step or processing engine in the overall process (*e.g.,* to a normalization system 308, a handwriting recognition system 310, an annotation recognition system 314, a music synthesizing system, or other suitable processing system).

Figure 7 schematically illustrates another example of a system or method according to the invention. Again, the procedure starts by receiving data relating to a stroke set to be classified (Step S700). Then, one or more local features of at least one individual stroke within the stroke set are evaluated (Step S702). While any suitable features of a stroke may be evaluated without departing from the invention, some examples of the invention that classify between writing type strokes and drawing type strokes evaluate the individual stroke length and stroke curvature as the local features of a stroke in the stroke set. In general, handwritten text contains a relatively large number of strokes that are relatively short in length and relatively curvy or loopy. As an example of this step of the procedure, systems and methods according to the invention may look at each individual stroke in the stroke set and determine the percentage of strokes in the stroke set that are curvy or loopy. Stroke sets that contain a large percentage of curvy or loopy strokes are more likely to contain handwritten text as compared to stroke sets containing a low percentage of curvy or loopy strokes. Additionally, stroke sets that contain relatively short and/or consistently sized strokes or stroke fragments also are more likely to contain handwritten text as compared to stroke sets in drawings, which are more likely to contain relatively long and inconsistently sized strokes or stroke fragments. As one example, a stroke set may be required to contain 60% or more drawing type strokes (*e.g.*, long and/or non-loopy strokes) before the stroke set may be classified as drawing type. The percentage may be changed, if desired, for example, depending on the number of strokes in the stroke set and/or the overall length of the line containing the stroke set.

If desired, the local features of the strokes in the stroke set may be characterized in several different ways. For example, in the procedure of Step S702, the system or method may determine the percentage of "loopy-long" strokes in the stroke set, the percentage of "loopy-short" strokes, the percentage of "straight-long" strokes, and the percentage of "straight-short" strokes, and then use this information as local features in making the classification or determination as to whether the stroke set contains writing type strokes or drawing type strokes.

The next step in the exemplary procedure illustrated in Figure 7 involves evaluation of contextual features relating to the stroke set (Step S704). Contextual features of a stroke set relate to characteristics of a group of strokes that are in some manner associated with a specific stroke or stroke set being classified (optionally including the characteristics of the specific stroke or stroke set being classified). Examples of contextual features of a stroke or stroke set include features or characteristics of strokes within the same stroke set, features or characteristics of strokes in proximity to the stroke or stroke set, and/or features or characteristics of strokes associated in some manner to the stroke or stroke set.

Some specific examples of contextual features relating to a stroke set that may be used in classifying or discerning writing stroke sets from drawing stroke sets include: the number of strokes or stroke fragments in the stroke set, the number of strokes or stroke fragments in a word or line containing the stroke set, the number of strokes or stroke fragments in a block containing the stroke set, the linearity of the stroke set, the linearity of a word or line containing the stroke set, and the linearity of lines in a block containing the stroke set.

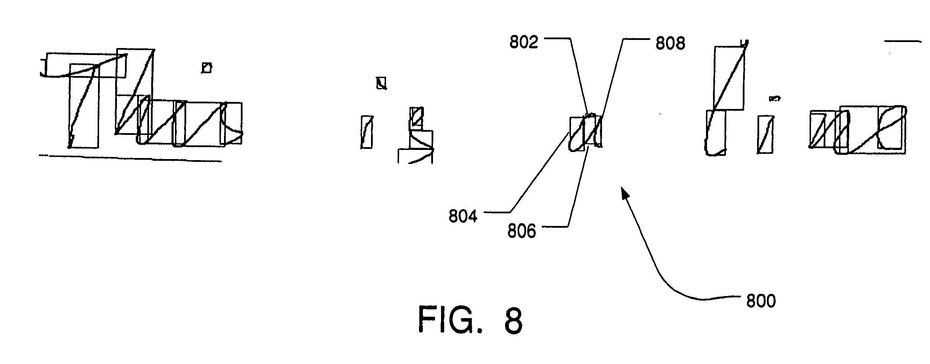

Stroke number in a stroke set may be readily determined, *e.g.*, by counting the number of pen-down to pen-up events within the stroke set, or in a word, line, or block containing the stroke set, etc. However, because some writing styles (such as cursive handwritten text) may contain relatively long continuous strokes (for example, as a person writes a lengthy word), it may be advantageous in some examples of the invention to utilize the number of stroke fragments, rather than the number of strokes. Figure 8 illustrates an example of a series of strokes broken into its corresponding stroke fragments. In one example, a "stroke fragment" may be considered to be a portion of a stroke obtained by breaking a stroke at its local minima and maxima points, when the baseline of the stroke is treated as horizontal. As shown in Figure 8, several of the individual strokes in the sentence "This is a line" contain plural stroke fragments. For example, the single stroke "a" (reference number 800) as written in this figure contains four different stroke fragments 802, 804, 806, and 808. Breaking a stroke into fragments tends to "normalize" cursive and printed handwriting (*i.e.,* stroke fragments of the cursive word "hello" appear relatively similar to stroke fragments of the printed word "hello"). Moreover, breaking a long stroke into stroke fragments provides a larger sample size when calculating statistics relating to the stroke set (*e.g.*, more reference points from which to calculate average or median stroke fragment height, width, etc.).

The number of fragments is simply a total count of the stroke fragments in the stroke set, or in the word, line, or block containing the stroke set, or in strokes associated with the stroke set, and the like. Generally, text or other writing will contain a relatively large number of stroke fragments as compared to drawings (which tend to have relatively large numbers of straight lines). Therefore, if a stroke set (*e.g.,* a word, line, or block) contains a large number of fragments (*e.g.*, 9 or more stroke fragments per line), there is a greater likelihood that this stroke set contains handwritten text, and the stroke set is considered to contain writing type strokes. In this example, stroke sets containing 8 fragments per line or less are considered to contain drawing type strokes.

Another contextual feature of a stroke set that may provide information as to whether the stroke set contains drawing or writing type strokes is the linearity of the stroke set itself, the linearity of a word, line, or block containing the stroke set, the linearity of other strokes associated with the stroke set, and/or the like. One example of a way of measuring stroke linearity is through the use of the stroke set's fragment centroid error. The centroid error for a stroke fragment, as used in this example, is the distance that the fragment's centroid lies from a regression line that best fits a line of strokes in or containing the stroke set. The fragment centroid error in a line of a stroke set may be considered to be the sum of centroid errors for each stroke fragment in the line or stroke set. As noted above, handwritten text (as well as certain other handwritten writing types) is generally quite linear, and the stroke sizes are typically relatively short. Accordingly, low centroid error means that the stroke fragments are located relatively close to the regression line, which means that the stroke fragments are more linear, and thus more likely to contain text. As one specific example, if the ratio of the fragment centroid error to line width for a stroke set is 0.2 or less, then the stroke set may be considered to contain writing type strokes, whereas if this ratio is greater than 0.2, the stroke set may be considered to contain drawing type strokes. If desired, the fragment centroid error for a stroke set may be normalized based on the number of stroke fragments in the stroke set (*e.g*., total fragment centroid error/number of stroke fragments), and appropriate threshold values can be determined using this normalized fragment centroid error value.

Returning to Figure 7, after the local and contextual features of the stroke set have been determined, the stroke set type is then determined based on this information (Step S706). Any suitable classification algorithm can be used without departing from the invention. For instance, a support vector machine (SVM) with radial basis function, a Bayesian classifier, a neural network, and the like may be used to perform this classification step without departing from the invention. Alternatively, the classification analysis could be based on an appropriate decision tree (*e.g.,* a linear decision tree).

After the classification step S706 is completed, the procedure may end (Step S708), or the resulting information may be used in a next step in the overall process, *e.g.*, to send the data or stroke sets to appropriate recognition systems or to other suitable processing systems or methods.

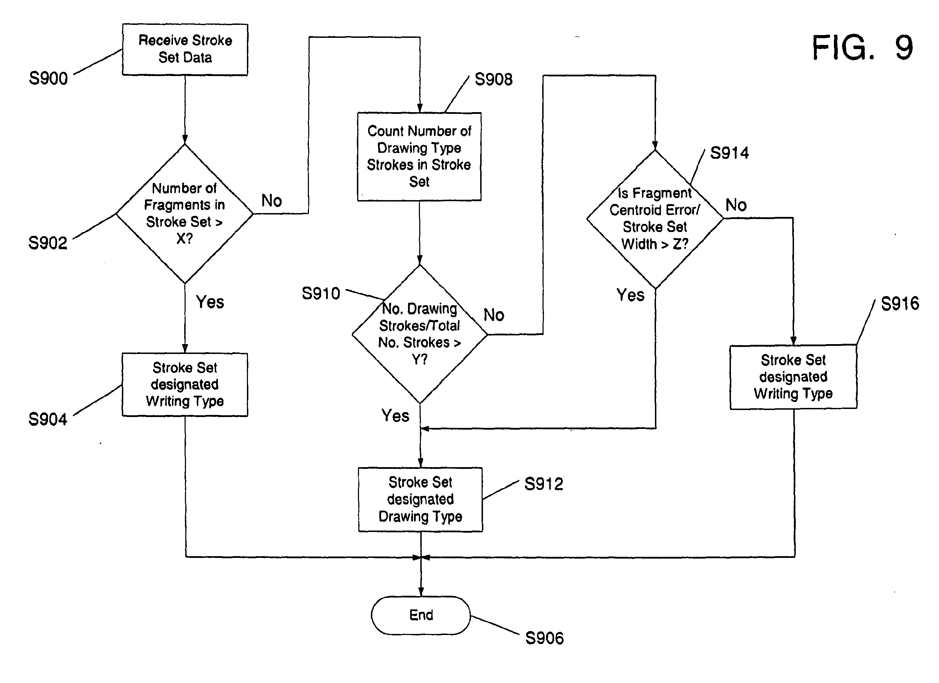

Figure 9 illustrates an exemplary algorithm that may be used in classification analysis procedures according to some examples of this invention. In this example, the classification analysis determines whether the stroke set contains writing type strokes or drawing type strokes. In the procedure, first the stroke set data is received or input into the system (Step S900), which can occur in any suitable manner, such as from a user entering ink into a stylus-based computing system, downloading from memory or another source, etc. At Step S902, the system determines whether the number of stroke fragments present in the stroke set exceeds a predetermined threshold limit (identified as "X" in Figure 9). If YES, the stroke set is designated as containing writing type strokes (Step S904), and the procedure ends (Step S906). Optionally, although not specifically illustrated in Figure 9, the procedure could begin classification analysis of a new stroke set, reanalyze a modified version of a previously analyzed stroke set, or otherwise proceed to another processing step.

The threshold level X can be set by the skilled artisan in any appropriate manner, depending, for example, on the overall size of the stroke set, the number of strokes in the stroke set, and the like. As one specific example, X is set at 8, such that stroke sets (*e.g*., lines of stroke data) containing 8 or fewer stroke fragments are considered to possibly contain drawing type strokes, whereas stroke sets containing 9 or more stroke fragments are considered to contain writing type strokes.

If, in Step S902, it is determined that the number of fragments in the stroke set is X or less (answer NO), the system then counts the number of individual drawing type strokes in the stroke set (Step S908). As described above, a determination of whether an individual stroke is potentially a drawing type stroke may be made, for example, by looking at the individual stroke length and stroke curvature. Drawings typically contain at least some longer strokes and some strokes that are less curvy (*e.g.*, having fewer stroke fragments). This step S910 in the procedure counts the number of strokes in the stroke set that have the characteristics of drawing type strokes.

Then, in Step S910, the system determines whether the ratio of the number of potential drawing type strokes in the stroke set to the overall total number of strokes in the stroke set exceeds a threshold level (identified as "Y" in Figure 9). If YES, the stroke set is designated as containing drawing type strokes (Step S912), and the procedure ends (Step S906) or otherwise moves forward.

The threshold value Y can be set at any appropriate level by the skilled artisan, based on routine experimentation. As one specific example, the Y value is set at 60%, such that stroke sets that contain 60% or more drawing type strokes are designated drawing type stroke sets, whereas stroke sets containing less than 60% drawing type strokes are not automatically classified as drawing type stroke sets.

If, at Step S910, the answer is NO (*i.e.,* the ratio of drawing type strokes to total strokes is less than the threshold Y), the system then determines whether the fragment centroid error for the stroke set indicates that the stroke set contains drawing type strokes or writing type strokes (*i.e.,* the "linearity" of the stroke set is considered). In the illustrated procedure, the system determines whether the ratio of the stroke set's fragment centroid error to the width of the entire stroke set is greater than a predetermined threshold value Z (Step S914). If YES, the stroke set is designated as containing drawing type strokes (Step S912), and the procedure ends (Step S906) or otherwise moves forward. If NO, the stroke set is designated as containing writing type strokes (Step S916), and then the procedure ends (Step S906) or otherwise moves forward. The threshold value Z also can be set at any appropriate level. As noted above, in one example, stroke sets having a fragment centroid error to width ratio of 0.2 or below may be considered writing type stroke sets, whereas stroke sets having a ratio greater than 0.2 may be considered drawing type strokes.

As is readily apparent, the algorithm and procedure illustrated in Figure 9 and described above are merely exemplary. The various steps, threshold levels, and order of steps may be readily changed and/or modified by the skilled artisan without departing from the invention.

### V. OTHER FEATURES

The classification analysis procedure 306 according to this example of the invention can be applied to electronic ink in any suitable manner, for example, as a post ink entry process, on a page-by-page basis. Advantageously, however, the classification analysis procedure will operate incrementally, as the user generates and adds ink in a stylus-based computing environment.

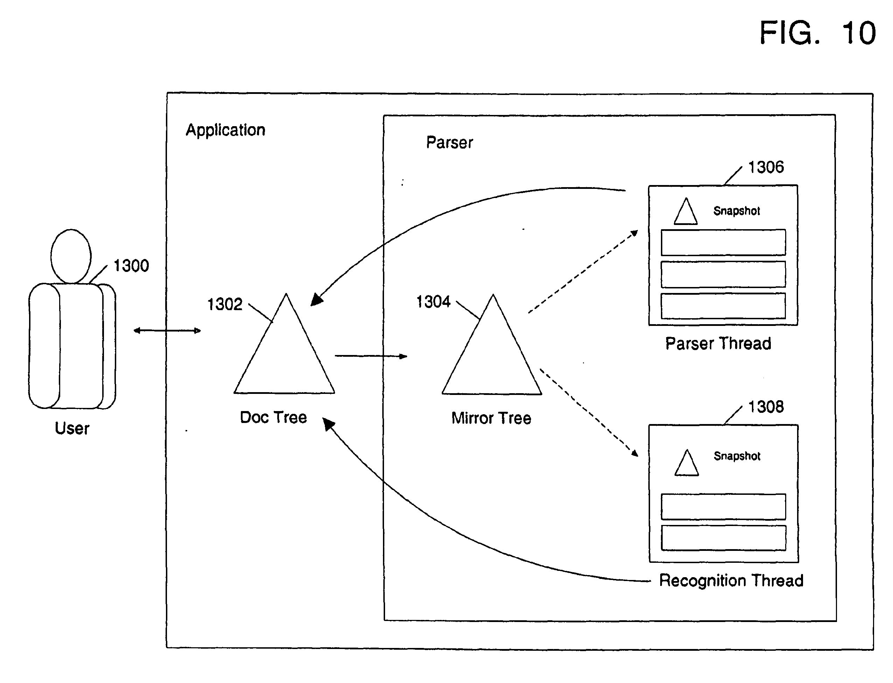

Figure 10 illustrates a general schematic diagram of a system in which classification analysis may proceed incrementally, as user 1300 adds ink to a page. First, the application in which the user 1300 operates will have a document tree data structure 1302. In order to make the document tree data structure 1302 available for processing while the user 1300 adds additional ink to the tree 1302, the parser will contain a mirror copy of the document tree data structure 1302. The mirror copy is called a "mirror tree" data structure 1304 in Figure 9, and this data structure 1304 changes as changes are made to the document tree data structure 1302. Once the mirror tree 1304 is produced, "snapshots" of the mirror tree 1304 at any point in time may be transferred to the parser thread 1306 and/or to a handwriting recognition thread 1308. The parser thread 1306 and/or the handwriting recognition thread 1308 may operate in the "background," while the user 1300 potentially adds additional ink to the document tree data structure 1302 in the application program. When the parser thread 1306 and/or handwriting recognition thread 1308 complete their operations on the mirror tree snapshot, they send the results back to the original application, updating the document tree data structure 1302, which updates are mirrored by the mirror tree data structure 1304. New "snapshots" can then be taken (including any new ink added by the user since the previous snapshot), and the parser thread 1306 and/or recognition thread 1308 can operate on the new snapshot (optionally focusing on changes made since the previous snapshot was analyzed). The classification analysis systems according to examples of the invention may operate in the parser, for example, as part of the parser thread 1306.

In this manner, the classification analysis systems and methods according to these examples of the invention can incrementally operate as changes are made to the original document 1302, which can reduce processing time, at least from the user's point of view.

### VI. CONCLUSION

While the invention has been described in terms of various specific examples, these specific examples merely exemplify the invention and do not limit it. Moreover, the fact that a specific feature or function of the invention is described in conjunction with a specific example does not mean that this feature or function is limited to use with that specific example of the invention. Rather, unless otherwise specified, the various features and functions described above may be used freely in any example of the invention. Also, while specific examples are provided in this specification, those skilled in the art will be able to determine appropriate tests and set appropriate threshold levels for classifying different types of strokes through the use of routine experimentation. Those skilled in the art also will appreciate that changes and modifications may be made to the exemplified versions of the invention without departing from the scope of the invention, as defined in the appended claims.

## Claims

1. A computer-implemented method for classifying ink strokes, comprising:
receiving input ink data (S600) including at least a first stroke set containing at least a first stroke;
determining whether the first stroke set (S706) contains the stroke type of writing type strokes or drawing type strokes, wherein the determining is based on: (a) at least one local feature (S702) relating to a characteristic of at least the first stroke; and (b) at least one contextual feature (S704) relating to at least one member selected from the group consisting of: the strokes contained in the first stroke set, and one or more strokes located within a predetermined range of the first stroke set; wherein the contextual feature at least includes information relating to the linearity of the selected member measured through the use of the selected member's fragment centroid error by determining whether the ratio of the selected member's fragment centroid error to the width of the entire selected member is greater than a predetermined threshold value, and
sending the first stroke set to a recognition system associated with the determined type of stroke, wherein the recognition system is one of a plurality of recognition systems, each specialized for the processing of one stroke type.

2. A method according to claim 1, wherein the determining is at least partly based on the number of stroke fragments (800, 802, 804, 806, 808) contained in the first stroke set.

3. A method according to claim 1, wherein the contextual feature includes information relating to a block (506, 514) of input ink data including the first stroke set.

4. A method according to claim 1, wherein the contextual feature includes information relating to a line (504, 512) of input ink data including the first stroke set.

5. A method according to claim 4, wherein the contextual feature includes information relating to a number of strokes or stroke fragments (800, 802, 804, 806, 808) in the line (504, 512) of input ink data including the first stroke set.

6. A method according to claim 5, wherein the contextual feature includes information relating to linearity of the line (504, 512) of input ink data including the first stroke set.

7. A method according to claim 4, wherein the contextual feature includes information relating to linearity of the line (504, 512) of input ink data including the first stroke set.

8. A method according to claim 1, wherein the local feature includes information relating to a first characteristic of at least one individual stroke included in the first stroke set.

9. A method according to claim 8, wherein the first characteristic includes information relating to at least one individual stroke's length.

10. A method according to claim 9, wherein the local feature further includes information relating to a second characteristic of at least one individual stroke.

11. A method according to claim 10, wherein the second characteristic includes information relating to at least one individual stroke's curvature.

12. A method according to claim 8, wherein the first characteristic includes information relating to at least one individual stroke's curvature.

13. A method according to claim 1, wherein the determining step additionally is based on information relating to a first characteristic of a first individual stroke included in the first stroke set.

14. A method according to claim 13, wherein the determining step additionally is based on information relating to a second characteristic of the first individual stroke.

15. A system for classifying ink strokes, comprising:
an input device for receiving ink data (S600), wherein the ink data includes information relating to at least a first stroke set containing at least a first stroke;
a processor system for determining whether the first stroke set (S706) contains the stroke type of writing type strokes or drawing type strokes, wherein the processor determines the type of stroke based on: (a) at least one local feature (S702) relating to a characteristic of at least the first stroke; and (b) at least one contextual feature (S704) relating to at least one member selected from the group consisting of: the strokes contained in the first stroke set, and at least one stroke located within a predetermined range of the first stroke set, wherein the contextual feature at least includes information relating to the linearity of the selected member measured through the use of the selected member's fragment centroid error by determining whether the ratio of the selected member's fragment centroid error to the width of the entire selected member is greater than a predetermined threshold value, and
a forwarding device for sending the first stroke set to a recognition system associated with the determined type of stroke, wherein each recognition system is one of a plurality of recognition systems, each specialized for the processing of one stroke type.

16. A system according to claim 15, wherein the determining is at least partly based on the number of stroke fragments (800, 802, 804, 806, 808) contained in the first stroke set.

17. A system according to claim 15, wherein the contextual feature includes information relating to a block (506, 514) of input ink data including the first stroke set.

18. A system according to claim 15, wherein the contextual feature includes information relating to a line (504, 512) of input ink data including the first stroke set.

19. A system according to claim 18, wherein the contextual feature includes information relating to a number of strokes or stroke fragments (800, 802, 804, 806, 808) in the line of input ink data including the first stroke set.

20. A system according to claim 19, wherein the contextual feature includes information relating to linearity of the line (504, 514) of input ink data including the first stroke set.

21. A system according to claim 18, wherein the contextual feature includes information relating to linearity of the line (504, 512) of input ink data including the first stroke set.

22. A system according to claim 15, wherein the local feature includes information relating to a first characteristic of at least one individual stroke included in the first stroke set.

23. A system according to claim 22, wherein the first characteristic includes information relating to at least one individual stroke's length.

24. A system according to claim 23, wherein the local feature further includes information relating to a second characteristic of at least one individual stroke.

25. A system according to claim 24, wherein the second characteristic includes information relating to at least one individual stroke's curvature.

26. A system according to claim 22, wherein the first characteristic includes information relating to at least one individual stroke's curvature.

27. A system according to claim 15, wherein the processor determines the type of stroke based additionally on information relating to a first characteristic of a first individual stroke included in the first stroke set.

28. A system according to claim 27, wherein the processor determines the type of stroke based additionally on information relating to a second characteristic of the first individual stroke.

29. A computer-readable medium having computer-executable instructions for performing steps comprising:
storing input ink data (S600) including at least a first stroke set containing at least a first stroke;
determining whether the first stroke set (S706) contains the stroke type of writing type strokes or drawing type strokes, and wherein the determining is based on: (a) at least one local feature (S702) relating to a characteristic of at least the first stroke; and (b) at least one contextual feature (S 704) relating to at least one member selected from the group consisting of: the strokes contained in the first stroke set, and one or more strokes located within a predetermined range of the first stroke set, wherein the contextual feature at least includes information relating to the linearity of the selected member measured through the use of the selected member's fragment centroid error by determining whether the ratio of the selected member's fragment centroid error to the width of the entire selected member is greater than a predetermined threshold value; and
sending the first stroke set to a recognition system associated with the determined type of stroke, wherein each recognition system is one of a plurality of recognition systems, each specialized for the processing of one stroke type.

## Patentansprüche

1. Computerimplementiertes Verfahren zum Klassifizieren von Tintenstrichen, das umfasst:
Empfangen von Eingabe-Tintendaten, (S600), die wenigstens eine erste Strich-Gruppe einschließen, die wenigstens einen Strich enthält;
Bestimmen, ob die erste Strich-Gruppe (S706) den Strich-Typ von Strichen des Schreib-Typs oder Strichen des Zeichen-Typs enthält, wobei das Bestimmen basiert auf:
a) wenigstens einem lokalen Merkmal (S702), das sich auf eine Charakteristik wenigstens des ersten Strichs bezieht; und
b) wenigstens einem Kontextmerkmal (S704), das sich auf wenigstens ein Element bezieht, das aus der Gruppe ausgewählt wird, die besteht aus:
den in der ersten Strich-Gruppe enthaltenen Strichen,
einem oder mehreren Strichen, die sich innerhalb eines vorgegebenen Bereiches der ersten Strich-Gruppe befinden, wobei das Kontextmerkmal wenigstens Informationen einschließt, die sich auf die Linearität des ausgewählten Elementes beziehen, die unter Verwendung des Schwerpunktfehlers eines Fragmentes des ausgewählten Elementes gemessen wird, indem bestimmt wird, ob das Verhältnis des Schwerpunktfehlers des Fragmentes des ausgewählten Elementes zu der Breite des gesamten ausgewählten Elementes größer ist als ein vorgegebener Schwellenwert, und
Senden der ersten Strich-Gruppe zu einem Erkennungssystem, das mit den bestimmten Typ von Strich verknüpft ist, wobei das Erkennungssystem eines einer Vielzahl von Erkennungssystemen ist, die jeweils auf die Verarbeitung eines Strich-Typs spezialisiert sind.

2. Verfahren nach Anspruch 1, wobei das Bestimmen wenigstens teilweise auf der Anzahl von Strich-Fragmenten (800, 802, 804, 806, 808) basiert, die in der ersten Strich-Gruppe enthalten sind.

3. Verfahren nach Anspruch 1, wobei das Kontextmerkmal Informationen einschließt, die sich auf einen Block (506, 514) von Eingabe-Tintendaten beziehen, die die erste Strich-Gruppe einschließen.

4. Verfahren nach Anspruch 1, wobei das Kontextmerkmal Informationen einschließt, die sich auf eine Linie (504, 512) von Eingabe-Tintendaten beziehen, die die erste Strich-Gruppe einschließen.

5. Verfahren nach Anspruch 4, wobei das Kontextmerkmal Informationen einschließt, die sich auf eine Anzahl von Strichen oder Strich-Fragmenten (800, 802, 804, 806, 808) in der Linie (504, 512) von Eingabe-Tintendaten beziehen, die die erste Strich-Gruppe einschließen.

6. Verfahren nach Anspruch 5, wobei das Kontextmerkmal Informationen einschließt, die sich auf Linearität der Linie (504, 512) von Eingabe-Tintendaten beziehen, die die erste Strich-Gruppe einschließen.

7. Verfahren nach Anspruch 4, wobei das Kontextmerkmal Informationen einschließt, die sich auf Linearität der Linie (504, 512) von Eingabe-Tintendaten beziehen, die die erste Strich-Gruppe einschließen.

8. Verfahren nach Anspruch 1, wobei das lokale Merkmal Informationen einschließt, die sich auf eine erste Charakteristik wenigstens eines einzelnen Strichs beziehen, der in der ersten Strich-Gruppe eingeschlossen ist.

9. Verfahren nach Anspruch 8, wobei die erste Charakteristik Informationen einschließt, die sich auf die Länge wenigstens eines einzelnen Strichs beziehen.

10. Verfahren nach Anspruch 9, wobei das lokale Merkmal des Weiteren Informationen einschließt, die sich auf eine zweite Charakteristik wenigstens eines einzelnen Strichs beziehen.

11. Verfahren nach Anspruch 10, wobei die zweite Charakteristik Informationen einschließt, die sich auf die Krümmung wenigstens eines einzelnen Strichs beziehen.

12. Verfahren nach Anspruch 8, wobei die erste Charakteristik Informationen einschließt, die sich auf die Krümmung wenigstens eines einzelnen Strichs beziehen.

13. Verfahren nach Anspruch 1, wobei der Schritt des Bestimmens zusätzlich auf Informationen basiert, die sich auf eine erste Charakteristik eines ersten einzelnen Strichs beziehen, der in der ersten Strich-Gruppe eingeschlossen ist.

14. Verfahren nach Anspruch 13, wobei der Schritt des Bestimmens zusätzlich auf Informationen basiert, die sich auf eine zweite Charakteristik des ersten einzelnen Strichs beziehen.

15. System zum Klassifizieren von Tinten-Strichen, das umfasst:
eine Eingabevorrichtung zum Empfangen von Tinten-Daten (S600), wobei die Tinten-Daten Informationen einschließen, die sich auf wenigstens eine erste Strich-Gruppe beziehen, die wenigstens einen ersten Strich enthält;
ein Verarbeitungssystem, das bestimmt, ob die erste Strich-Gruppe (S706) den Strich-Typ von Strichen des Schreib-Typs oder Strichen des Zeichen-Typs enthält, wobei die Verarbeitungseinrichtung den Typ von Strich auf Basis von:
a) wenigstens einem lokalen Merkmal (S702), das sich auf eine Charakteristik wenigstens des ersten Strichs bezieht; und
b) wenigstens einem Kontextmerkmal (S704) bestimmt, das sich auf wenigstens ein Element bezieht, das aus der Gruppe ausgewählt wird, die besteht aus:
in der ersten Strich-Gruppe enthaltenen Strichen und
wenigstens einem Strich, der sich innerhalb eines vorgegebenen Bereiches der ersten Strich-Gruppe befindet, wobei das Kontextmerkmal wenigstens Informationen einschließt, die sich auf die Linearität des ausgewählten Elementes beziehen, die unter Verwendung des Schwerpunktfehlers eines Fragmentes des ausgewählten Elementes gemessen wird, indem bestimmt wird, ob das Verhältnis des Schwerpunktfehlers des Fragmentes des ausgewählten Elementes zu der Breite des gesamten ausgewählten Elementes größer ist als ein vorgegebener Schwellenwert, und
eine Weiterleiteinrichtung, die die erste Strich-Gruppe zu einem Erkennungssystem sendet, das mit dem bestimmten Typ von Strich verknüpft ist, wobei jedes Erkennungssystem eines einer Vielzahl von Erkennungssystemen ist, die jeweils auf die Verarbeitung eines Strich-Typs spezialisiert ist.

16. System nach Anspruch 15, wobei das Bestimmen wenigstens teilweise auf der Anzahl von Strich-Fragmenten (800, 802, 804, 806, 808) basiert, die in der ersten Strich-Gruppe enthalten sind.

17. System nach Anspruch 15, wobei das Kontextmerkmal Informationen einschließt, die sich auf einen Block (506, 514) von Eingabe-Tintendaten beziehen, die die erste Strich-Gruppe einschließen.

18. System nach Anspruch 15, wobei das Kontextmerkmal Informationen einschließt, die sich auf eine Linie (504, 512) von Eingabe-Tintendaten beziehen, die die erste Strich-Gruppe einschließen.

19. System nach Anspruch 18, wobei das Kontextmerkmal Informationen einschließt, die sich auf eine Anzahl von Strichen oder Strich-Fragmenten (800, 802, 804, 806, 808) in der Linie von Eingabe-Tintendaten beziehen, die die erste Strich-Gruppe einschließen.

20. System nach Anspruch 19, wobei das Kontextmerkmal Informationen einschließt, die sich auf Linearität der Linie (504, 514) von Eingabe-Tintendaten beziehen, die die erste Strich-Gruppe einschließen.

21. System nach Anspruch 18, wobei das Kontextmerkmal Informationen einschließt, die sich auf Linearität der Linie (504, 512) von Eingabe-Tintendaten beziehen, die die erste Strich-Gruppe einschließen.

22. System nach Anspruch 15, wobei das lokale Merkmal Informationen einschließt, die sich auf eine erste Charakteristik wenigstens eines einzelnen Strichs beziehen, der in der ersten Strich-Gruppe eingeschlossen ist.

23. System nach Anspruch 22, wobei die erste Charakteristik Informationen einschließt, die sich auf die Länge wenigstens eines einzelnen Strichs beziehen.

24. System nach Anspruch 23, wobei das lokale Merkmal des Weiteren Informationen einschließt, die sich auf eine zweite Charakteristik wenigstens eines einzelnen Strichs beziehen.

25. System nach Anspruch 24, wobei die zweite Charakteristik Informationen einschließt, die sich auf die Krümmung wenigstens eines einzelnen Strichs beziehen.

26. System nach Anspruch 22, wobei die erste Charakteristik Informationen einschließt, die sich auf die Krümmung wenigstens eines einzelnen Strichs beziehen.

27. System nach Anspruch 15, wobei die Verarbeitungseinrichtung den Typ von Strich zusätzlich auf Basis von Informationen bestimmt, die sich auf eine erste Charakteristik eines ersten einzelnen Strichs beziehen, der in der ersten Strich-Gruppe eingeschlossen ist.

28. System nach Anspruch 27, wobei der Prozessor den Typ Strich zusätzlich auf Basis von Informationen bestimmt, die sich auf eine zweite Charakteristik des ersten einzelnen Strichs beziehen.

29. Computerlesbares Medium, das durch Computer ausführbare Befehle zum Durchführen von Schritten aufweist, die umfassen:
Speichern von Eingabe-Tintendaten (S600), die wenigstens eine erste Strich-Gruppe einschließen, die wenigstens einen ersten Strich enthält;
Bestimmen, ob die erste Strich-Gruppe (S706) den Strich-Typ von Strichen des Schreib-Typs oder Strichen von Zeichen-Typ enthält, wobei das Bestimmen basiert auf:
a) wenigstens einem lokalen Merkmal (S702), das sich auf eine Charakteristik wenigstens des ersten Strichs bezieht; und
b) wenigsten einem Kontextmerkmal (S704), das sich auf wenigstens ein Element bezieht, dass aus der Gruppe ausgewählt wird, die besteht aus:
den in der ersten Strich-Gruppe enthaltenen Strichen, und
einem oder mehreren Strichen, die sich innerhalb eines vorgegebenen Bereiches der ersten Strich-Gruppe befinden, wobei das Kontextmerkmal wenigstens Informationen einschließt, die sich auf die Linearität des ausgewählten Elementes beziehen, die unter Verwendung des Schwerpunktfehlers eines Fragmentes des ausgewählten Elementes gemessen wird, indem bestimmt wird, ob das Verhältnis des Schwerpunktfehlers des Fragmentes des ausgewählten Elementes zu der Breite des gesamten ausgewählten Elementes größer ist als ein vorgegebener Schwellenwert; und
Senden der ersten Strich-Gruppe zu einem Erkennungssystem, das mit dem bestimmten Typ von Strich verknüpft ist, wobei jedes Erkennungssystem eines einer Vielzahl von Erkennungssystemen ist, die jeweils auf die Verarbeitung eines Strich-Typs spezialisiert sind.

## Revendications

1. Procédé mis en oeuvre par ordinateur pour classer des traits d'encre, le procédé consistant à :
recevoir des données d'encre d'entrée (S600) comprenant au moins un premier ensemble de traits contenant au moins un premier trait ;
déterminer si le premier ensemble de traits (S706) contient des traits du type écriture ou des traits du type dessin, la détermination étant faite sur la base de : (a) au moins une particularité locale (S702) relative à une caractéristique d'au moins le premier trait ; et (b) au moins une particularité contextuelle (S704) relative à au moins un élément sélectionné dans le groupe comprenant : les traits contenus dans le premier ensemble de traits, et un ou plusieurs traits situés à une distance prédéterminée du premier ensemble de trait ; la particularité contextuelle comprenant au moins des informations relatives à la linéarité de l'élément sélectionné mesurée à l'aide de l'erreur de centroïde de fragment de l'élément sélectionné en déterminant si le rapport entre l'erreur de centroïde de fragment de l'élément sélectionné et la largeur de l'élément sélectionné tout entier est supérieur à une valeur de seuil prédéterminée, et
envoyer le premier ensemble de traits à un système de reconnaissance associé au type de trait déterminé, le système de reconnaissance étant l'un de plusieurs systèmes de reconnaissance spécialisés chacun dans le traitement d'un type de trait donné.

2. Procédé selon la revendication 1, dans lequel la détermination est au moins en partie basée sur le nombre de fragments de trait (800, 802, 804, 806, 808) contenus dans le premier ensemble de traits.

3. Procédé selon la revendication 1, dans lequel la particularité contextuelle comprend des informations relatives à un bloc (506, 514) de données d'encre d'entrée comprenant le premier ensemble de traits.

4. Procédé selon la revendication 1, dans lequel la particularité contextuelle comprend des informations relatives à une ligne (504, 512) de données d'encre d'entrée comprenant le premier ensemble de traits.

5. Procédé selon la revendication 4, dans lequel la particularité contextuelle comprend des informations relatives à un nombre de traits ou de fragments de trait (800, 802, 804, 806, 808) dans la ligne (504, 512) de données d'encre d'entrée comprenant le premier ensemble de traits.

6. Procédé selon la revendication 5, dans lequel la particularité contextuelle comprend des informations relatives à la linéarité de la ligne (504, 512) de données d'encre d'entrée comprenant le premier ensemble de traits.

7. Procédé selon la revendication 4, dans lequel la particularité contextuelle comprend des informations relatives à la linéarité de la ligne (504, 512) de données d'encre d'entrée comprenant le premier ensemble de traits.

8. Procédé selon la revendication 1, dans lequel la particularité locale comprend des informations relatives à une première caractéristique d'au moins un trait individuel contenu dans le premier ensemble de traits.

9. Procédé selon la revendication 8, dans lequel la première caractéristique comprend des informations relatives à la longueur d'au moins un trait individuel.

10. Procédé selon la revendication 9, dans lequel la particularité locale comprend en outre des informations relatives à une seconde caractéristique d'au moins un trait individuel.

11. Procédé selon la revendication 10, dans lequel la seconde caractéristique comprend des informations relatives à la courbure d'au moins un trait individuel.

12. Procédé selon la revendication 8, dans lequel la première caractéristique comprend des informations relatives à la courbure d'au moins un trait individuel.

13. Procédé selon la revendication 1, dans lequel l'étape de détermination est en outre basée sur des informations relatives à une première caractéristique d'un premier trait individuel contenu dans le premier ensemble de traits.

14. Procédé selon la revendication 13, dans lequel l'étape de détermination est en outre basée sur des informations relatives à une seconde caractéristique du premier trait individuel.

15. Système pour classer des traits d'encre, comprenant :
un dispositif d'entrée pour recevoir des données d'encre (S600), les données d'encre comprenant des informations relatives à au moins un premier ensemble de traits contenant au moins un premier trait ;
un système de processeur pour déterminer si le premier ensemble de traits (S706) contient des traits du type écriture ou des traits du type dessin, le processeur déterminant le type de trait sur la base de : (a) au moins une particularité locale (S702) relative à une caractéristique d'au moins le premier trait ; et (b) au moins une particularité contextuelle (S704) relative à au moins un élément sélectionné dans le groupe comprenant : les traits contenus dans le premier ensemble de traits, et au moins un trait situé à une distance prédéterminée du premier ensemble de traits, la particularité contextuelle comprenant au moins des informations relatives à la linéarité de l'élément sélectionné mesurée à l'aide de l'erreur de centroïde de fragment de l'élément sélectionné en déterminant si le rapport entre l'erreur de centroïde de fragment de l'élément sélectionné et la largeur de l'élément sélectionné tout entier est supérieur à une valeur de seuil prédéterminée, et
un dispositif d'acheminement pour envoyer le premier ensemble de traits à un système de reconnaissance associé au type de trait déterminé, chaque système de reconnaissance étant l'un de plusieurs systèmes de reconnaissance spécialisés chacun dans le traitement d'un type de trait donné.

16. Système selon la revendication 15, dans lequel la détermination est au moins en partie basée sur le nombre de fragments de trait (800, 802, 804, 806, 808) contenus dans le premier ensemble de traits.

17. Système selon la revendication 15, dans lequel la particularité contextuelle comprend des informations relatives à un bloc (506, 514) de données d'encre d'entrée comprenant le premier ensemble de traits.

18. Système selon la revendication 15, dans lequel la particularité contextuelle comprend des informations relatives à une ligne (504, 512) de données d'encre d'entrée comprenant le premier ensemble de traits.

19. Système selon la revendication 18, dans lequel la particularité contextuelle comprend des informations relatives à un nombre de traits ou de fragments de trait (800, 802, 804, 806, 808) dans la ligne de données d'encre d'entrée comprenant le premier ensemble de traits.

20. Système selon la revendication 19, dans lequel la particularité contextuelle comprend des informations relatives à la linéarité de la ligne (504, 512) de données d'encre d'entrée comprenant le premier ensemble de traits.

21. Système selon la revendication 18, dans lequel la particularité contextuelle comprend des informations relatives à la linéarité de la ligne (504, 512) de données d'encre d'entrée comprenant le premier ensemble de traits.

22. Système selon la revendication 15, dans lequel la particularité locale comprend des informations relatives à une première caractéristique d'au moins un trait individuel contenu dans le premier ensemble de traits.

23. Système selon la revendication 22, dans lequel la première caractéristique comprend des informations relatives à la longueur d'au moins un trait individuel.

24. Système selon la revendication 23, dans lequel la particularité locale comprend en outre des informations relatives à une seconde caractéristique d'au moins un trait individuel.

25. Système selon la revendication 24, dans lequel la seconde caractéristique comprend des informations relatives à la courbure d'au moins un trait individuel.

26. Système selon la revendication 22, dans lequel la première caractéristique comprend des informations relatives à la courbure d'au moins un trait individuel.

27. Système selon la revendication 15, dans lequel le processeur détermine le type de trait en se basant en outre sur des informations relatives à une première caractéristique d'un premier trait individuel contenu dans le premier ensemble de traits.

28. Système selon la revendication 27, dans lequel le processeur détermine le type de trait en se basant en outre sur des informations relatives à une seconde caractéristique du premier trait individuel.

29. Support lisible par ordinateur comportant des instructions exécutables par ordinateur pour exécuter les étapes consistant à :
stocker des données d'encre d'entrée (S600) comprenant au moins un premier ensemble de traits contenant au moins un premier trait ;
déterminer si le premier ensemble de traits (S706) contient des traits du type écriture ou des traits du type dessin, et la détermination étant faite sur la base de : (a) au moins une particularité locale (S702) relative à une caractéristique d'au moins le premier trait ; et (b) au moins une particularité contextuelle (S704) relative à un moins un élément sélectionné dans le groupe comprenant: les traits contenus dans le premier ensemble de traits, et un ou plusieurs traits situés à une distance prédéterminée du premier ensemble de trait, la particularité contextuelle comprenant au moins des informations relatives à la linéarité de l'élément sélectionné mesurée à l'aide de l'erreur de centroïde de fragment de l'élément sélectionné en déterminant si le rapport entre l'erreur de centroïde de fragment de l'élément sélectionné et la largeur de l'élément sélectionné tout entier est supérieur à une valeur de seuil prédéterminée, et
envoyer le premier ensemble de traits à un système de reconnaissance associé au type de trait déterminé, chaque système de reconnaissance étant l'un de plusieurs systèmes de reconnaissance spécialisés chacun dans le traitement d'un type de trait donné.
